# EUROPEAN PATENT SPECIFICATION

(11) **EP 1 239 186 B1**
(45) Date of publication and mention of the grant of the patent: **29.10.2003**
(21) Application number: 00986052.9
(22) Date of filing: 15.12.2000
(51) Int. Cl.: F16H 37/08, F16H 15/50

(54) **SELF-CONTAINED CONTINUOUSLY-VARIABLE TRANSMISSION WITH MECHANICAL INTEGRAL TORQUE CONVERTER HAVING AUTOMATIC DRIVE CONTROL**
AUTONOMES KONTINUIERLICH VERÄNDERBARES GETRIEBE MIT MECHANISCHEM WANDLER UND AUTOMATISCHER GETRIEBESTEUERUNG
TRANSMISSION INFINIMENT VARIABLE AUTONOME DE CONVERTISSEUR MECANIQUE DE COUPLE INTEGRAL AVEC COMMANDE AUTOMATIQUE DES VITESSES

(30) Priority: 17.12.1999 MX 9911945
(43) Date of publication of application: 11.09.2002
(73) Proprietor: Borbolla Gonzalez, Rodrigo, San Miguel Allende, Guanajuato 37700 (MX)
(72) Inventor: Borbolla Gonzalez, Rodrigo, San Miguel Allende, Guanajuato 37700 (MX)
(74) Representative: Molnia, David
(86) International application number: MX0000055
(87) International publication number: WO01044690

(56) References cited:
- FR-A- 1 397 291
- US-A- 1 978 439
- US-A- 3 241 382
- PATENT ABSTRACTS OF JAPAN vol. 016, no. 047 (M-1208), 6 Febrero 1992 (1992-02-06) & JP 03 249459 A (SUZUKI MOTOR CORP), 7 Noviembre 1991 (1991-11-07)

## Description

This invention is primarily intended for use as an energy transformation device in the automotive industry; i.e. transmission systems. The device may also be used on any appliance that uses a power plant or requires a constant speed drive.

### BACKGROUND

The invention offers a new, simpler assembly of an Continuously Variable Transmission (CVT), of which there are several designs. Some designs base their operation on the change of speed of some component (normally the sun gear) of a planetary gearing system, to provide variable speed on the output shaft that is integrated directly or indirectly to another one of it's components (normally the annular gear), as is the case of patent number US5,564,998. This change is regulated- by a variator mechanism which employs sliding rollers in one or many pairs of thoroidal discs such as disclosed in patent US5,395,292 or through the use of belts that operate in poles with varying diameters as described in patent US4,553,450. Another design uses a torque converter in which hydraulic fluid is used between the turbine an the pump to vary it's traction as illustrated in patent US4,644,821. There also exists the continually variable transmission like the one disclosed in the US4,229,985 patent that uses a system of conic rollers with an intermediate ring to modulate speed by varying its angle.

All of the described inventions suffer from great losses of power that in a higher or lower degree, affect the efficiency of the engine. In addition, many have a higher degree of complexity in it's manufacture, making the mechanisms more expensive in their operation and maintenance.

### ADVANTAGES ON THE STATE OF THE ART

1. To control the vehicle's motion through the variations of the transmission and not by the engine's revolutions per minute, so that the engine operates at a constant optimum design speed, under every condition.
2. Improve fuel economy by 30% or above, increase time between service intervals, and improved serviceability.
3. Provide immediate throttle response under any condition.
4. To have additional back up power for adverse conditions, such as excess load, steep hills or sudden acceleration.
5. Provide a self-controlled infinitely variable transmission, which operates without the use of external control such as a computer.
6. Provide a completely automatic drive mechanism with additional power available when required, reducing the shifting of drive mechanisms by the operator.
7. Provide a regulating auto-controlled Constant Speed Drive (CSD), using the transmission inversely; which supplies traction through the output shaft.

### BRIEF DESCRIPTION OF THE FIGURES

The invention is best understood utilizing the following figures, where
Fig 1. Is a full illustration of the transmission; allowing view of the primary sequence on the top part of the conic body, and the variable sequence on the lower part.
Fig 1A. Is a cross section view of the transmission (illustrating the fix-type rollers) operating in the primary sequence.
Fig. 1B. Is a cross section view of the rear part of the transmission operating in the primary sequence and normal drive; it also demonstrates the shift mechanism for Cruise and Neutral.
Fig. 1C. Is a plan view of the unidirectional clutch - bearings (17 and 18) in locked position.
Fig. 2A. Is a sectional view of the transmission (showing the fix-type rollers) operating the variable sequence.
Fig. 2B. Is a sectional view of the rear part of the transmission operating in cruise drive, it incorporates the shift mechanism from Normal to Cruise, Neutral and Reverse.
Fig. 2C. Is a sectional view of the rear part of the transmission operating in cruise drive, as indicated in cut line 2C-2C of the figure 2B in which the rear gear train is visible.
Fig. 3. Is a detailed perspective view of the locking system of the sun gear and the mechanical torque sensor for the variable transmission.
Fig. 4A. Is a schematic view of the moving parts of the Primary Transmission.
Fig. 4B. Is an schematic view of the moving parts of the Variable Transmission with fix-type rollers.
Fig. 4C. Is an schematic view of the Variable Transmission with pitching rollers.
Figs. 5A and 5B Show a simplified view of the contact angle of the impeller with the fix-type or pitching rollers shown in figures 4B. and 4C.
Fig. 5C Shows a isolated view of the grooves and the pitching system of the rollers, shown in figures 4C and 5B.
Figs. 6A and 6B are simplified figures of the back side view of three displacement positions of the Variable Transmission System shown in figures 4B and 4C.

### SUMMARY OF THE INVENTION

The invention is a Self Contained Continuously Variable Transmission with an Integral Mechanical Torque Converter and an Automatic Drive Control, which consists of three systems that interact harmoniously sharing components and are defined as follows:
A) A Primary Sequence system and a two position traction synchronizer based on a planetary gear system (3, 4 and 5) which consists of a primary gear (1) with an annular gear mounted on a planet carrier (2), an annular gear (3) and an unidirectional clutch (17) mounted on a cylindrical impeller of increasing diameter (10) a set of 3 or more planets (4) a sliding sun gear (5) a primary traction and control shaft (7) and a double coupling shaft (19).
B) A sliding control system of the traction receptor gear system, and overdrive/economy control that consists of centrifugal counterweighs (8) a sliding sun gear (5) a primary traction and control shaft (7), a central splined bar (21), a positioning spider (12), a friction disk (22) and a lock plate (6), a torque sensor consisting of a sensor spring that can be spiral (9) and a shifting mechanism of the torque sensor (20).
C) Mechanical torque converter system, of constant speed consisting of a primary traction and control shaft with an hellicoidal slot (7), a central splined bar (21), an annular gear (3), a cylindrical impeller of increasing diameter (10), a system with several rollers with shafts and a rear gear (13), a central gear (15) a second planetary gearing system (14) fixed to a positioning spider (12), an unidirectional clutch (18) mounted on the outer shaft (16), and a double coupling shaft (19).

The primary sequence system consists of a primary gear that reduces the engine RPM. and transmits it to the planet carrier (2) as demanded by the accelerator. This system, during the initial acceleration from idle to the optimum engine design speed, keeps the annular gear (3) fixed by means of the unidirectional clutch (17); both mounted on the conic impeller (10). The sun gear (5) then moves backwards unlatching from the lock plate (6), and transmits the torque to the primary traction and control shaft (7), which in turn transfers the torque to the double coupling shaft (19).

Once the optimum engine design speed has been achieved, the centrifuge counter weights (8) move the sun gear (5) forward, unlatching the primary traction and control shaft (7) from the transmission, and locking it in fixed position to control the variable sequence.

During the primary sequence, the two-position traction synchronizer by means of the second unidirectional clutch (18), restricts the outer shaft (16) from spinning during the initial transmission operation, in order to allow the free rotation of the primary traction and control shaft (7). Once the variable transmission starts operating, the outer shaft (16) will reach the same speed as the double coupling shaft. The second unidirectional clutch will then engage both shafts (16 and 19) so that the outer shaft will now transmit the traction, and the sequence change is synchronized.

The deployment control system of the traction receptor gear system, works as follows: Once the sun gear is placed in it's locked position up front, it perceives the torque's reaction delivered to the transmission, it will surpass the sensor spring (9) supported by the friction plate (22), and will cause the primary traction and control shaft (7) to spin a certain amount of rotations depending on the torque that surpasses the friction, and through the hellicoidal groove and the splines of the central bar, will deploy the positioning spider (12) lengthwise. In this manner the roller train system moves axially through the control shaft, up to the required position to maintain the said RPM's of the conic impeller (initially all the way forward, because it requires more torque).

The overdrive and economy control system, by means of a mechanism, increases or reduces manually the spring sensor's tension (9), calibrating from inside the vehicle the operation speed of the engine (normally +/- 500 RPM), depending on the drive selection. This mechanism will be able to freely rotate in opposite direction within the normal economy range, to dampen the inverse torque during deceleration.

In the mechanical torque converter system, the modulation of the variable pitch rate operates as follows: Once the sun gear (5) has been stopped, the primary transmission and control shaft (7) is engaged to the positioning spider (12), which will deploy to a distance corresponding to the received torque. Meanwhile, the annular gear (3) is now moved by the input gear pinion, releasing the conic impeller (10) from the unidirectional clutch (17), transmitting the traction to the non-skid rollers system (11) (in the above described controlled position) engaged by it's back gear (13) to a second planetary system (14) through the central gear (15) that is joined to the outer shaft (16) so the double coupling shaft (19), now rotated by the outer shaft (16), operates with a variable output speed rate, according to the contact diameter with the conic impeller (10). This position is automatically controlled when the receptor system (11, 13, 14, 15 and 16) is moved lengthwise by the positioning spider (12) through the helical groove of the primary traction and control shaft (7) along with the central bar's splines(21).

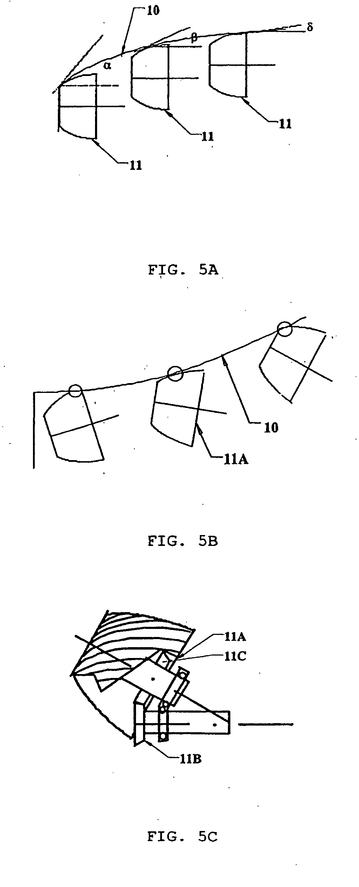

The mechanical torque converter system can be adapted to work in two ways:
a) Non-skid fix-type rollers (11): Consisting of rubber or compound material rollers, with an axel that is coupled to the back gear. Rollers can be made of metal, using traction fluid for adequate adhesion.
b) Grooved pitching rollers (11A): Consisting of parabolic shaped rollers with helical grooves and it's axel with internal gears linked to the rear gear shaft (Fig. 5C).

In the pitching rollers system (11A), their axel incorporates a gear that rotates around the guide gear (11B) linked to the back gear (13) in a 180° range as the traction receptor system moves axially, causing the contact area of the rollers with the impeller to be deployed, initially it will be with the tip of the rollers and when making the complete span (180°) with the heel, so we get a limited contact point between them, and a different rate of pitch. The rollers have helical grooves (11A) corresponding to the contact angle with which they engage with the impeller (10), and whose grooves are straight and lengthwise along to their inner surface.

The mechanism has the following characteristics:
1. The engine power is completely transmitted, except for losses due to friction, since a mechanical device of variable pitch is used for torque modulation.
2. It greatly improves the vehicle's driveability, since it has a auto-controlled pitch rate by the engine torque; it has a synchronized shift sequence system, making it easy to operate, optimizing the engine operation, extending it's working life and maintenance laps, increasing fuel economy.
3. It can be used in automotive equipment as a transmission or as an auxiliary back up output speed control in any other type. of machine or equipment.
4. The engine works at a constant speed, so accessories such as a generator or electric alternator with fixed frequency for alternating current, or hydraulic pumps with constant flow can be attached.
5. It is axially assembled and it has relatively few moving parts; making it easier to build, and has fewer failure modes.
6. It has a wide range of mechanical advantage, that is why it only requires an inversing gear for reverse operation, but a gear train with several speeds or just with a single one for cruise speed, can be incorporated depending on the apparatus's requirements.
7. Other accessories such as a torque indicator may be easily added, as well as control systems such as a centrifuge governor, hydraulic, or electric controllers, for the deployment of the variable transmission.
8. If it is used in an inverted way, providing traction to the output shaft, it can work as a Constant Speed Drive at the input shaft.

### DETAILED DESCRIPTION OF THE INVENTION

The invention is a Continuously Variable Transmission using ,a cylindrical impeller with an increasing diameter (10) that may be conic or parabolic and is powered by an engine transmitting;a variable torque, while maintaining the same angular input speed.

Within the impeller (10), the torque is transmitted through a roller traction system (11). The rollers are rotated at a variable speed depending on the diameter where they make contact, and are deployed along the inside of the impeller automatically, depending on the power supplied by the engine, and transmitting it to the output shaft (19), at an exact pitch rate, providing the necessary torque to maintain or increase the vehicle's speed instantaneously.

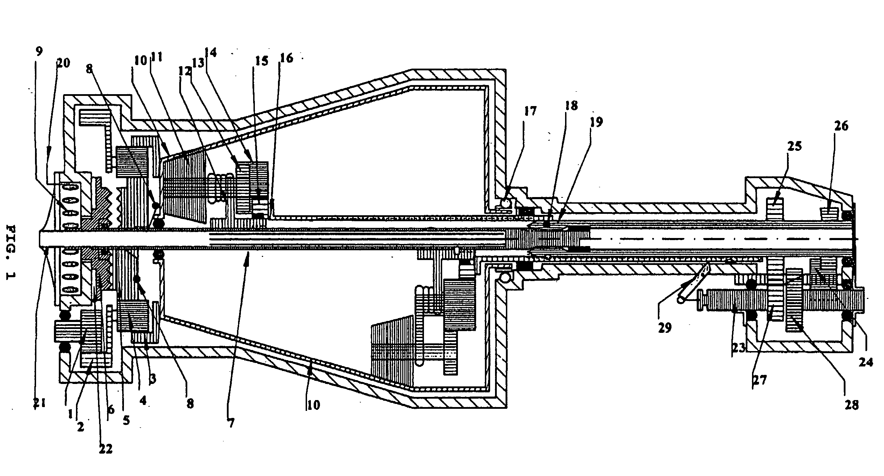

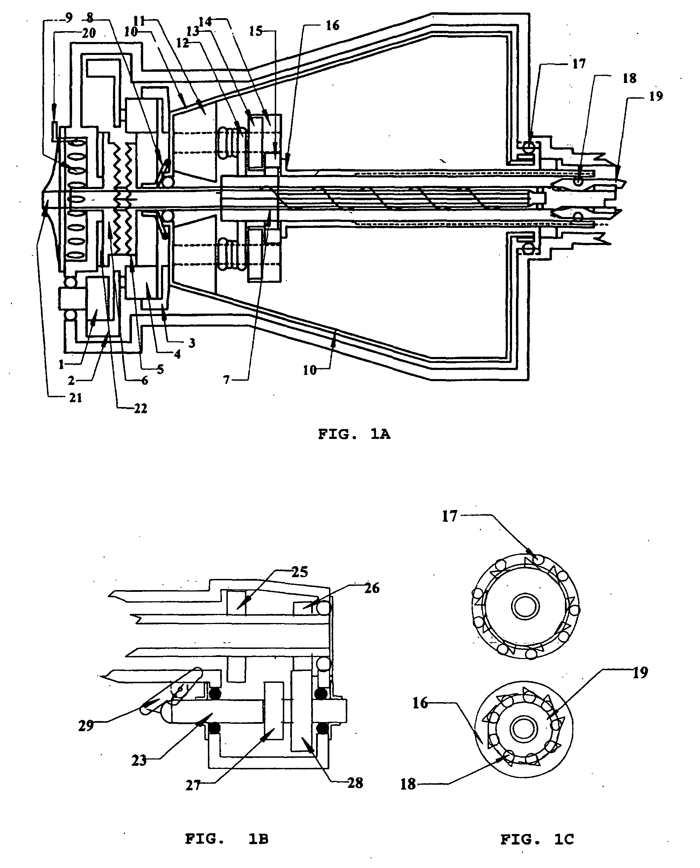

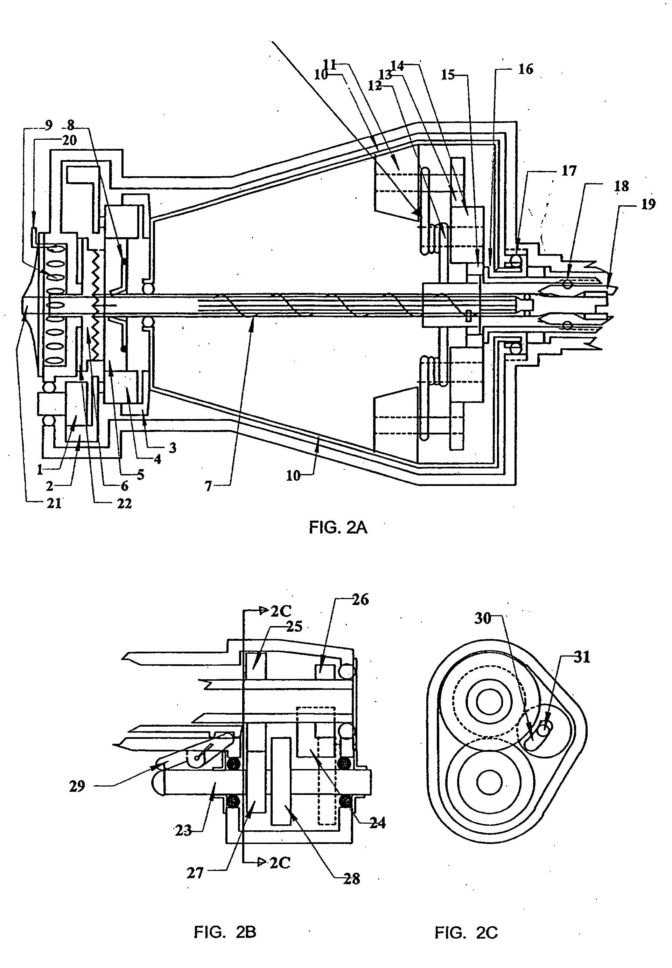

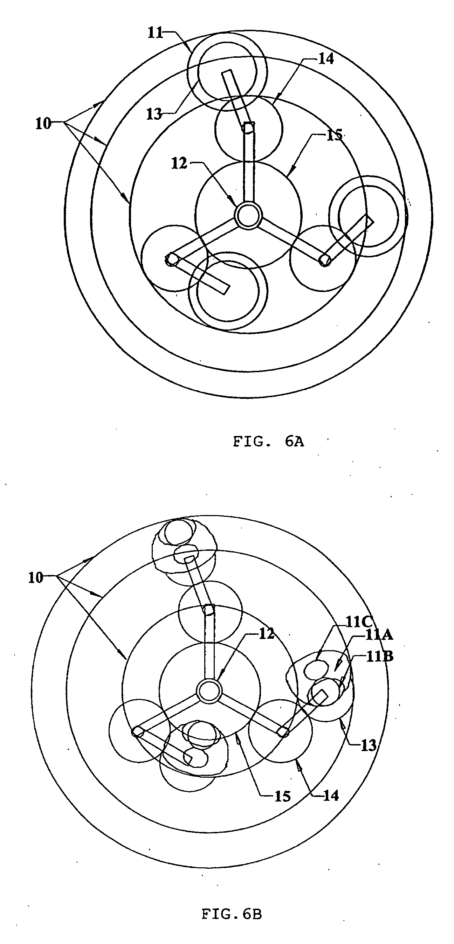

The CVT is made up of two epicyclical gears and rollers systems (Fig. 1A parts 3, 4 and 5 and Fig. 6A and 6B parts 10 to 15), with concentric shafts (7 and 16), that interact to provide a regulated output transmission. As a result, the operation speed of the engine remains constant and provides the traction with a speed and torque corresponding to the power demanded (Fig. 2A) for the vehicle instant speed.

The invention consists of an initial take-off transmission that operates with a low pitch rate by the sun gear (5) through the primary traction and control shaft (7) while the engine achieves optimum operation speed; and the other through the rear epicyclical gear system (Fig. 4B or 4C), linked to the annular gear (2) of the front epicyclical gear system. The planetary system receives the traction in a variable way since the inner race is a cylinder of increasing diameter (10) that may have grooves through it's interior surface so the rollers (11) can adequately adhere. Inside the cylinder a roller system (typically 3 planets with 3 link gears (11), (13) and (14) that may be fix-type (Fig 6A,11) or with a pitching mechanism (Fig. 6B,11A), deploys lengthwise and transmits torque to the vehicle traction through an outer shaft. (See figs. 4B, 4C).

The fix-type rollers (11), must have a curved shape so that when they are at the forward position the tangent line to the point where they make contact with the cone, will have a relative angle with the impellers conicity (Fig. 5A α,β and γ) that compensates the tendency of a wheel to turn when spinning on an inclined surface, and which is reduced as the track or inside surface of the cone (10), increases it's radius. The sectional diagram (Fig 1 and 2), shows the fix-type roller option for clarity.

The fix-type rollers (11) can be substituted by pitching rollers (11A), which rotate translaterally around the gear shaft (11B), with a tendency to climb to increase the contact with the impeller (19). If this option is used, an additional gear must be included to the front planetary system to avoid the reverse gear; such that both the primary and the variable systems will rotate in the same direction.

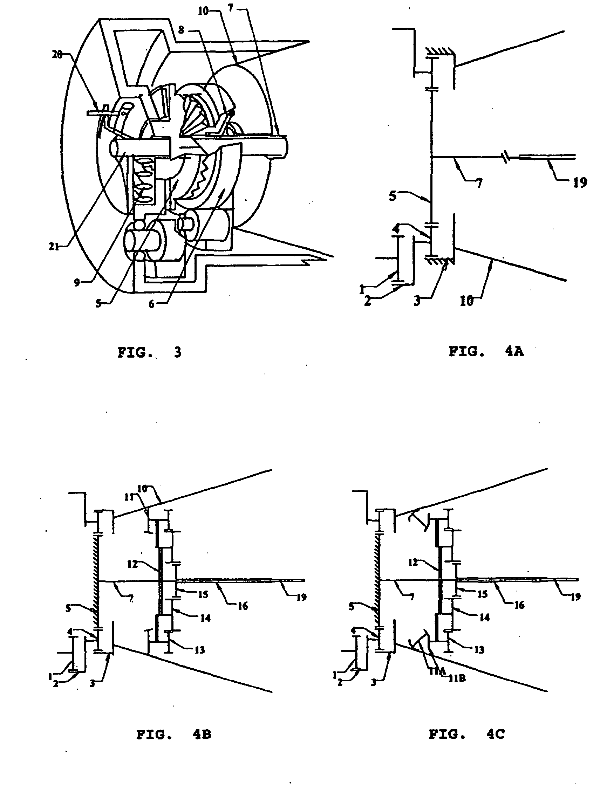

The traction control utilizes a torque sensor (9) linked to the positioning spider's deployment system (5), (6) and (7). The system also includes an overdrive device (20) which, depending on the selection made, will increase the engine operation RPM, to increase the output torque when an excessive load or when a sudden acceleration is required. It can also reduce the RPM in an inverse way (Fig. 3).

### OPERATION

Turning to the operation of the invention initially, the torque is supplied to the front planetary system (1 and 2) where through the planet gears, the sun gear and the annular gear (3) is transmitted indiscriminately; since the sun gear (5) has a higher mechanical advantage because it's pitch rate is less than the variable system's (11 thru 16), (even when it is at its minimum pitch ratio), this gear (5) will then begin to rotate. Consequently, the annular gear (3) will tend to react in an opposite direction, but the unidirectional clutch (17) prevent it(Fig 1C).

Since the sun gear is spring loaded, it will remain in its rearward position. Then the primary traction and control shaft (7) firmly linked to the sun gear (5), will engage with the inner grooves of the double coupling shaft (19) thus operating the primary traction.

The speed can be maintained within the take-off range, or if demanded, will be increased until it achieves the optimum engine operating speed. At that moment, the centrifuge counterweighs (8) linked to the sun gear (5), will extend causing it to move forward, stopping and locking the sun gear with the lock plate (6) being now linked to the torque sensor mechanism (9), and disengaging the primary traction and control shaft (7) from the double coupling shaft (19).

Keeping the sun gear locked in the forward position, the controlled sequence begins operating. The transmission will now operate through the annular gear (3) coupled to the impeller (10) that will rotate in the same direction as the primary transmission and will be freed from the unidirectional clutch (17); transmitting traction to the second planetary system inside of the impeller (11, 12, 13 and 14), which will deploy axially and is linked by the central gear (15) to the outer shaft (16).

The outer shaft (16) has the second unidirectional clutch integrated (18), since all along the shaft there are grooves shaped in such way that will limit the rotation of the balls (Fig. 1C), operating as the outer race characteristic of this kind of clutch, which during the operation of the primary transmission will not allow it to interfere with the primary traction and control shaft (7), but when it has higher relative speed than this shaft, will hook the balls transmitting now the traction to the double coupling shaft (19) and thus synchronizing the change of sequence.

Once the impeller (10) is turning, it will engage the outer shaft (16) with the rest of the transmission as described above, hooking up the positioning spider with the helical groove (typically with 5 turns) of the primary traction and control shaft, which function is now the control of the transmission. The reaction torque of the sun gear will allow the shaft to turn backwards proportionately to this torque, and in combination with the splines of the central bar (21) that may have a helical path to compensate for the backwards component resulting from the contact force of the rollers (11) with the cone (10); it will deploy the roller system (11-16) initially backwards, but when raising the impellers traction, it will increase the torque and they will be brought back to their natural position (corresponding to the optimum RPM designed for the engine and that is, going forward).

When the demand for power is increased, the sun gear rotates overcoming the sensor spring tension and the friction of the friction disk (22), making the primary traction and control shaft spin proportionally to the torque. The roller system (11-16) will move forward to contact a smaller diameter of the impeller until the vehicle raises its speed and consequently the torque will decrease, and the roller system will move backward to contact a bigger diameter of the impeller so that without increasing the impeller's speed, the speed of the rollers (11), the linking gears (14), the central gear (15), the outer shaft (16), the double coupling shaft (19), and consequently the transmission speed will increase, while the engine maintains a constant speed (Fig. 6A and 6B).

The same thing happens with the pitching roller option (11A), in this case, the rollers will spin transitorily (as far as they contact with the impeller), on the guiding gear (11B) linked to the rear gear (13) and to the rest of the system, which has been already explained. So that, according to the pitch angle, they make contact with the tip or heel of each roller, as so to isolate the contact point and avoid skidding (Fig, 5B).

Should it be required to over speed the engine operation during the controlled sequence at any given moment; the external tip of the sensor spring must be rotated (9) through the shifting mechanism (20), as so to increase the spring's tension (9), so that the mechanism requires more power to defeat the control system (Fig. 3) forcing the sliding system (11-16) to stay up front more than it normally would, operating with less speed and more torque, and the opposite of this if it is desired to operate softly (normally at high vehicle speeds), the inverse operation will be carried out.

In the same way, if the cruise selection is armed, when the transmission reaches certain number of output revolutions per minute -proportionately to the deployment of the output shaft (16), the cruise lever (29) will be activated, moving forward the counter shaft gear assembly (23), to obtain a greater pitch rate. Since the output torque will be increased abruptly, the torque sensor will immediately move forward the group of rollers (11-16) to a position in which the engine is stable again in it's best operating condition, and will continue operating with the controlled traction system; when reducing the vehicle's speed under said RPM., it will go back to it's original gear relation with the same inverse process.

If the speed is reduced in a way that an excessive torque be required (corresponding to the primary sequence), the roller system (11 through 16) will initially deploy forward completely, but since the torque is bigger than the one corresponding to this position, the sun gear will be unlatched, liberating itself from the halting position, to then transmit the traction in a primary sequence.

When receiving a negative torque (as in a decrease in vehicle speed), the sun gear (5) will deploy to it's rear position, spinning the three elements of the planetary system (3, 4 and 5), then the traction will be void until the primary traction and control shaft's speed (7) be higher than the outer shaft's (19); at this moment, the impeller (10) will be locked once more, through the unidirectional clutch (17), operating new the primary sequence again.

If during that event, acceleration is demanded again, the primary traction and control shaft (7) will increase the speed and the counterweights will deploy, in a way that the sun gear (5) will move to the front position, and the variable sequence will continue to operate.

The CVT utilizes an automatic mechanism for cruise or high speed, that when engaged, and the roller system (11 thru 16) achieves a certain deployment, an acting lever engages a multiplier gear (27) with a bigger gear at the output shaft )(Fig 1A) (25). When decelerating, the roller system (11 through 16) will go back, and should these return forward to this said position, it will disengage the multiplier gear, now linking gears 26 and 28 again (Fig. 1B).

For the reverse operation, it should be selected manually while the engine runs in idle, by completely moving rearwards the counter shaft (23) deploying the reverse shaft (29) through the positioning slot (30) and engaging the reverse gear (24).

The lubricating system of the variable transmission will be routed through a vein inside the central bar (21), that distributes the oil through it, thus falling due to gravity on the primary transmission and control shaft (7), and to the rest of the system through the helical groove, and holes scattered throughout the spider arms (12). The other systems will be oiled by immersion or sprinkling.

Other embodiment are with in the claims modifications of this invention will become apparent to those skilled in the art without departing from the scope of the invention as defined in the claims.

## Claims

1. A Self Contained Continuously Variable Transmission with an Integral Mechanical Torque Converter having Automatic Drive Control, comprising:
a stationary housing;
a primary traction and control shaft (7) having helicoidal slots;
a cylindrical impeller of increasing diameter (10);
a double coupling shaft (19);
a lock plate (6);
a central splined bar (21) fixed to the housing;
an input gear (1) that receives motion from an engine;
an annular gear (2) meshing with said input gear (1);
a front epicyclical gear system comprising
a planet gear carrier fixed to said annular gear (2);
a set of three or more first planet gears (4) mounted on said planet carrier;
a second annular gear (3) engaging said first planet gears (4) and coupled to said cylindrical impeller (10); and,
a sliding sun gear (5) fixedly coupled to said primary shaft (7) to rotate therewith, and meshing with said first planet gears (4), wherein the sun gear (5) with the primary shaft (7) may slide between two positions, a first position in which the primary shaft (7) is coupled to said double coupling shaft (19) and a second position in which the primary shaft (7) is de-coupled from said double coupling shaft (19), and in which the sun gear (5) is locked to said lock plate (6) and the primary shaft (7);
a control system for controlling the sliding of said sun gear (5) comprising centrifugal counterweights (8) for causing said sun gear (5) and primary shaft (7) to slide between said two positions; and
a torque sensor consisting of
a sensor spring (9) hooking said sun gear (5) to said lock plate (6), when it is at said second position; and
a shifting mechanism (20) for adjusting the sensitivity of said torque sensor (9);
a first unidirectional clutch (17) mounted on said cylindrical impeller (10) for locking to said housing and releasing said cylindrical impeller;
a rear epicyclical gear system comprising
a system with several rollers (11) moved by said cylindrical impeller (10);
a set of several rear gears (13) connected by respective shafts to said rollers (11);
a set of several pivoting arms (32) that carries said rear gears and shafts;
a second set of several planet gears (14) engaged to said rear gears (13);
a positioning spider (12) holding said pivoting arms (32) and said second planet gears, wherein said positioning spider (12) may be deployed along said primary shaft (7) by interaction of a pin fixed to said spider with said helicoidal slots and said splines of said splined bar (21);
a central gear (15) mounted on said positioning spider and engaging said second planet gears (14); and
an outer shaft (16) fixed to said central gear (15);
a second unidirectional clutch (18) arranged between said outer shaft (16) and said double coupling shaft (19) for engaging and disengaging said outer shaft (16) to said double coupling shaft (19), which outputs torque from said infinitely variable transmission.

2. The CVT of claim 1, further comprising a rear gear train (23, 24, 25, 26, 27, 28 and 29) for multiplying and reverse operation which will be the output of the transmission drivingly connected to said double coupling shaft (19).

3. The CVT of claim 2, wherein:
said primary shaft (7), primary gear (1), first planet gears (4), rollers (11), rear gears and shafts (13), second planet gears (14) and elements (23, 27 and 28) of said rear gear train, have their own axis which is parallel with each other.

4. The CVT of claim 2, wherein said sliding sun gear (5), annular gear (2), primary shaft (7), double coupling shaft (19), lock plate (6), first unidirectional clutch (17), cylindrical impeller (10), second annular gear (3), positioning spider (12), central splined bar (21), outer shaft (16) and said second unidirectional clutch (18), and elements (25 and 26) of said rear gear train have a lengthwise axis that is common to all of them.

5. The CVT o claim 1, where said primary gear (1) transmits the motion to said planet carrier, and to said sun gear (5) during the initial acceleration from zero to the optimum speed, by keeping said second annular gear (3) fixed by means of said first unidirectional clutch (17).

6. The CVT of claim 1, where said sun gear (5) has inclined tabs that deploy said sun gear (5) backwards when not receiving reaction torque, unlatching it from said lock plate (6), and so transmits the torque to said primary shaft (7), which engages said double coupling shaft (19) and disengages said spider (12) from moving.

7. The CVT of claim1, where the tension of said sensor spring can be manually adjusted during the operation of the transmission by said mechanism (20) to surpass the measured force and thus, increase or reduce the operation speed of the power plant engaged to said primary gear (1).

8. The CVT of claim 1, where said impeller of increasing diameter (10) may be conic or parabolic shaped, and may have lengthwise grooves along its inner surface.

9. The CVT of claim 1, where said rollers system (11) may be a pitching roller system comprising:
two or more parabolic shaped rollers (11A), two or more inclined gears fixed concentrically to said parabolic shaped rollers (11A),
two or more guide gears (11B) engaged to said inclined gears and with a shaft coupled to said rear gears (13).

10. The CVT of claim 9, where the parabolic shaped rollers (11A) have an axle not parallel to the axle of said guide gears (11B).

11. The CVT of claim 9, where the axle of said parabolic shaped rollers (11A) that incorporates said inclined gear which rotates and positions radially in a 180° range around said guide gear (11B) and rear gear (13) as said spider moves axially.

12. The CVT of claim 9, where said parabolic shaped rollers (11A) have helical grooves corresponding to the contact angle with which they match with said impellers grooves.

13. The CVT of claim 2, where said double coupling shaft (19) engaging with said rear gear train can sequentially shift upwards or downwards by means of the connecting link (29) every time said outer shaft (16) reaches certain longitudinal deployment.

## Patentansprüche

1. In sich geschlossenes, stufenlos veränderliches Getriebe mit einem eingebauten mechanischen Drehmomentwandler, der eine automatische Antriebssteuerung besitzt, umfassend:
ein feststehendes Gehäuse;
eine Treib- und Steuerantriebswelle (7) mit schraubenförmigen Schlitzen;
ein Zylinderantriebsrad mit zunehmendem Durchmesser (10);
eine Doppelkupplungswelle (19);
eine Verriegelungsplatte (6);
einen mittigen Zahnstab (21), der an dem Gehäuse befestigt ist;
ein Eingangszahnrad (1), das die Bewegung von einem Motor empfängt;
einen Zahnring (2), der mit dem Eingangszahnrad (1) ineinander greift;
ein vorderes Umlaufgetriebesystem, umfassend
einen Planetenradträger, der an dem Zahnring (2) befestigt ist;
eine Menge von drei oder mehr ersten Planetenrädern (4), die an dem Planetenträger angebracht sind;
einen zweiten Zahnring (3), der mit den ersten Planetenrädern (4) in Eingriff ist und der mit dem Zylinderantriebsrad (10) gekoppelt ist; und
ein gleitendes Sonnenrad (5), das fest mit der Antriebswelle (7) gekoppelt ist, so dass es sich mit ihr dreht, und das mit den ersten Planetenrädern (4) ineinander greift, wobei das Sonnenrad (5) mit der Antriebswelle (7) zwischen zwei Stellungen, einer ersten Stellung, in der die Antriebswelle (7) mit der Doppelkupplungswelle (19) gekoppelt ist, und einer zweiten Stellung, in der die Antriebswelle (7) von der Doppelkupplungswelle (19) entkoppelt ist und in der das Sonnenrad (5) mit der Verriegelungsplatte (6) und mit der Antriebswelle (7) verriegelt ist, gleiten kann;
ein Steuersystem zum Steuern des Gleitens des Sonnenrads (5), umfassend Flieh-Gegengewichte (8), die bewirken, dass das Sonnenrad (5) und die Antriebswelle (7) zwischen den zwei Stellungen gleiten; und
einen Drehmomentsensor, enthaltend
eine Sensorfeder (9), die das Sonnenrad (5) an der Verriegelungsplatte (6) festhakt, wenn sie in der zweiten Stellung ist; und
einen Verschiebemechanismus (20) zum Einstellen der Empfindlichkeit des Drehmomentsensors (9);
eine erste Einrichtungs-Schaltkupplung (17), die an dem Zylinderantriebsrad (10) angebracht ist, um das Gehäuse zu verriegeln und das Zylinderantriebsrad freizugeben;
ein hinteres Umlaufgetriebesystem, umfassend
ein System mit mehreren Walzen (11), die von dem Zylinderantriebsrad (10) bewegt werden;
eine Menge mehrerer hinterer Zahnräder (13), die über jeweilige Wellen mit den Walzen (11) verbunden sind;
eine Menge mehrerer Schwenkarme (32), die die hinteren Zahnräder und die Wellen tragen;
eine zweite Menge mehrerer Planetenräder (14), die mit den hinteren Zahnrädern (13) in Eingriff sind;
eine Stellspinne (12), die die Schwenkarme (32) und die zweiten Planetenräder hält, wobei die Stellspinne (12) durch die Wechselwirkung eines an der Spinne befestigten Stifts mit den schraubenförmigen Schlitzen und mit den Zähnen des Zahnstabs (21) entlang der Antriebswelle (7) aufgestellt werden kann;
ein mittiges Zahnrad (15), das an der Stellspinne angebracht ist und das mit den zweiten Planetenrädern (14) in Eingriff ist; und eine äußere Welle (16), die an dem mittigen Zahnrad (15) befestigt ist;
eine zweite Einrichtungs-Schaltkupplung (18), die zwischen der äußeren Welle (16) und der Doppelkupplungswelle (19) angeordnet ist, um die äußere Welle (16) mit der Doppelkupplungswelle (19), die von dem stufenlos veränderlichen Getriebe ein Drehmoment abgibt, in Eingriff und außer Eingriff zu bringen.

2. CVT nach Anspruch 1, ferner umfassend einen hinteren Getriebezug (23, 24, 25, 26, 27, 28 und 29) für den Vervielfachungs- und Umkehrbetrieb, der der Ausgang des Getriebes ist, der treibend mit der Doppelkupplungswelle (19) verbunden ist.

3. CVT nach Anspruch 2, bei dem
die Antriebswelle (7), das Antriebszahnrad (1), die ersten Planetenräder (4), die Walzen (11), die hinteren Zahnräder und Wellen (13), die zweiten Planetenräder (14) und die Elemente (23, 27 und 28) des hinteren Getriebezugs ihre eigene Achse besitzen, die parallel zu jeder anderen ist.

4. CVT nach Anspruch 2, bei dem das gleitende Sonnenrad (5), der Zahnring (2), die Antriebswelle (7), die Doppelkupplungswelle (19), die Verriegelungsplatte (6), die erste Einrichtungs-Schaltkupplung (17), das Zylinderantriebsrad (10), der zweite Zahnring (3), die Stellspinne (12), der mittige Zahnstab (21), die äußere Welle (16) und die zweite Einrichtungs-Schaltkupplung (18) und die Elemente (25 und 26) des hinteren Getriebezugs eine Längsachse besitzen, die ihnen allen gemeinsam ist.

5. CVT nach Anspruch 1, bei dem das Antriebszahnrad (1) während der Anfangsbeschleunigung von null auf die optimale Geschwindigkeit die Bewegung auf den Planetenträger und auf das Sonnenrad (5) überträgt, indem sie den zweiten Zahnring (3) mittels der ersten Einrichtungs-Schaltkupplung (17) festhält.

6. CVT nach Anspruch 1, bei dem das Sonnenrad (5) geneigte Domen besitzt, die das Sonnenrad (5) nach hinten aufstellen, wenn es kein Reaktionsdrehmoment aufnimmt, wobei sie es von der Verriegelungsplatte (6) ausklinken, so dass es das Drehmoment auf die Antriebswelle (7) überträgt, was die Doppelkupplungswelle (19) in Eingriff bringt, während es die Spinne (12) außer Eingriff der Bewegung bringt.

7. CVT nach Anspruch 1, bei dem die Spannung der Sensorfeder während des Betriebs des Getriebes durch den Mechanismus (20) von Hand eingestellt werden kann, um die gemessene Kraft zu übersteigen und somit die Betriebsgeschwindigkeit des Antriebsaggregats, das mit dem Antriebszahnrad (1) in Eingriff ist, zu erhöhen oder zu verringern.

8. CVT nach Anspruch 1, bei dem das Antriebsrad mit zunehmendem Durchmesser (10) konisch oder parabolisch geformt sein kann und entlang seiner inneren Oberfläche Längsnuten besitzen kann.

9. CVT nach Anspruch 1, bei dem das Walzensystem (11) ein Neigungswalzensystem sein kann, umfassend:
zwei oder mehr parabolisch geformte Walzen (11A), an denen zwei oder mehr geneigte Zahnräder konzentrisch befestigt sind,
zwei oder mehr Führungszahnräder (11B), die mit den geneigten Zahnrädern in Eingriff sind und die mit einer Welle mit den hinteren Zahnrädern (13) gekoppelt sind.

10. CVT nach Anspruch 9, bei dem die parabolisch geformten Walzen (11A) eine Achse besitzen, die nicht parallel zu der Achse der Führungszahnräder (11B) ist.

11. CVT nach Anspruch 9, bei dem sich die Achse der parabolisch geformten Walzen (11A), die das geneigte Zahnrad enthält, radial in einem Bereich von 180° um das Führungszahnrad (11B) und um das hintere Zahnrad (13) dreht und positioniert, während sich die Spinne axial bewegt.

12. CVT nach Anspruch 9, bei dem die parabolisch geformten Walzen (11A) schraubenförmige Nuten besitzen, die dem Kontaktwinkel entsprechen, mit dem sie mit den Nuten des Antriebsrads zusammenpassen.

13. CVT nach Anspruch 2, bei dem die Doppelkupplungswelle (19), die mit dem hinteren Getriebezug in Eingriff ist, jedes Mal, wenn die äußere Welle (16) eine bestimmte Längsaufstellung erreicht, mittels des Zwischenstücks (29) aufeinander folgend nach oben oder nach unten verschoben werden kann.

## Revendications

1. Transmission à variation continue autonome pourvue d'un convertisseur de couple mécanique intégral ayant une commande d'entraînement automatique, comprenant :
- un logement fixe ;
- un arbre de traction primaire et de commande (7) ayant des rainures hélicoïdales ;
- un impulseur cylindrique de diamètre croissant (10) ;
- un arbre d'accouplement double (19) ;
- une plaquette de frein (6) ;
- une barre centrale cannelée (21) attachée au logement ;
- un engrenage d'entrée (1) qui reçoit le mouvement depuis le moteur ;
- un engrenage annulaire (2) formant engrènement avec ledit engrenage d'entrée (1);
- un système d'engrenage épicycloïdal frontal comprenant
- un support d'engrenage planétaire attaché au dit engrenage un ensemble de trois premiers engrenages planétaires ou plus (4) monté sur ledit support planétaire ;
- un second engrenage annulaire (3) engrenant lesdits engrenages planétaires (4) et couplé au dit impulseur cylindrique (10) ; et
- une roue solaire coulissante (3) couplée de manière fixe au dit arbre primaire (7) de manière à tourner de façon conjointe et engrenant lesdits premiers engrenages planétaires (4), où la roue solaire (5) avec l'arbre primaire (7) peut coulisser entre deux positions, une première position dans laquelle l'arbre primaire (7) est couplé avec ledit arbre d'accouplement double (19) et une seconde position dans laquelle l'arbre primaire (7) est découplé dudit arbre d'accouplement double (19), et dans lequel la roue solaire (5) est bloquée sur ladite plaquette de frein (6) et l'arbre primaire (7) ;
- un système de contrôle pour contrôler le coulissement de ladite roue solaire (5) comprenant des contrepoids centrifuges (8) permettant de provoquer le coulissement de ladite roue solaire (5) et de l'arbre primaire (7) entre lesdites deux positions ; et
- un couplemètre se composant de
- un ressort de capteur (9) agrafant ladite roue solaire (5) à ladite plaquette de freinage (6), quand il se trouve dans ladite seconde position ; et
- un mécanisme de dérivation (20) permettant de régler la sensibilité dudit couplemètre (9) ;
- un premier embrayage unidirectionnel (17) monté sur ledit impulseur cylindrique (10) permettant le blocage dudit logement et libérant ledit impulseur cylindrique ;
- un système d'engrenages épicycloïdal arrière comprenant :
- un système avec plusieurs galets (11) déplacé par ledit impulseur cylindrique (10) ;
- un ensemble de plusieurs engrenages arrières (13) raccordé par des arbres respectifs aux dits galets (11) ;
- un ensemble de plusieurs bras pivotants (32) qui supportent lesdits engrenages arrières et les arbres ;
- un second ensemble de plusieurs engrenages planétaires (14) engrenés aux dits engrenages arrières (13);
- un croisillon de positionnement (12) maintenant lesdits bras pivotants (32) et lesdits seconds engrenages planétaires, dans lequel système ledit croisillon de positionnement (12) peut être déployé le long dudit arbre primaire (7) par l'interaction d'une broche fixée au dit croisillon par l'intermédiaire desdites rainures hélicoïdales et desdites cannelures de ladite barre cannelée (21) ;
- un engrenage central (15) monté sur ledit croisillon de positionnement et engrenant lesdits seconds engrenages planétaires (14); et
- un arbre externe (16) attaché au dit engrenage central (15);
- un second embrayage unidirectionnel (13) agencé entre ledit arbre externe (16) et ledit arbre d'accouplement double (19) permettant d'engrener et de désengrener ledit arbre externe (16) dudit arbre d'accouplement double (19), qui fournit un couple à partir de ladite transmission infiniment variable.

2. Transmission à variation continue selon la revendication 1, comprenant par ailleurs un train d'engrenages arrières (23, 24, 25, 26, 27, 28 et 29) permettant de multiplier et de procéder à l'opération inverse qui sera le débit de la transmission raccordée de manière commandée au dit arbre d'accouplement double (19).

3. Transmission à variation continue selon la revendication 1, dans laquelle :
ledit arbre primaire (7), l'engrenage primaire (1), les premiers engrenages planétaires (4), les galets (11), les engrenages arrières et des arbres (13), les seconds engrenages planétaires (14) et des éléments (23, 27, et 28) dudit train arrière d'engrenages possèdent leurs propres axes lesquels sont parallèles les uns aux autres.

4. Transmission à variation continue selon la revendication 2 dans laquelle ladite roue solaire coulissante (5), l'engrenage annulaire (2), l'arbre primaire (7), l'arbre d'accouplement double (19), la plaquette de freinage (6), le premier embrayage unidirectionnel (17), l'impulseur cylindrique (10), le second engrenage annulaire (3) le croisillon de positionnement (12), la barre centrale cannelée (21), l'arbre externe et ledit second embrayage unidirectionnel (18) et des éléments (25 et 26) dudit train d'engrenages arrière possèdent un axe longitudinal qui est commun à l'ensemble d'entre eux.

5. Transmission à variation continue selon la revendication 1, dans laquelle ledit engrenage primaire (1) transmet le mouvement au dit support planétaire, et à ladite roue solaire (5) durant l'accélération initiale depuis zéro jusqu'à la vitesse optimale, en maintenant ledit second engrenage annulaire (3) attaché par l'intermédiaire dudit premier embrayage unidirectionnel (17).

6. Transmission à variation continue selon la revendication 1, dans laquelle ladite roue solaire (5) incline des compensateurs qui déploient ladite roue solaire (5) vers l'arrière quand aucun couple de réaction n'est reçu, le déclenchant depuis ladite plaquette de freinage (6), et elle transmet ainsi le couple au dit arbre primaire (7), qui engrène ledit arbre d'accouplement double (19) et désengrène ledit croisillon (12) l'empêchant de se mouvoir.

7. Transmission à variation continue selon la revendication 1 dans laquelle la tension dudit ressort de capteur peut être réglé manuellement au cours de l'opération de transmission par ledit mécanisme (20) de manière à dépasser la force mesurée et ainsi à augmenter ou à réduire la vitesse de fonctionnement de l'installation motrice engrenée audit engrenage primaire (1).

8. Transmission à variation continue selon la revendication 1, dans laquelle ledit impulseur de diamètre croissant (10) peut être de forme conique ou parabolique et peut présenter des gorges longitudinales le long de sa surface interne.

9. Transmission à variation continue selon la revendication 1 dans laquelle le système de galets (11) peut être un système de galets de tangage comprenant :
deux ou plusieurs rouleaux de forme parabolique (11A), deux ou plusieurs engrenages inclinés attachés de manière concentrique aux dits galets de forme parabolique (11A);
deux ou plusieurs engrenages de guidage (11B) engrenés aux dit engrenages inclinés et dotés d'un arbre couplé aux dits engrenages arrière (13).

10. Transmission à variation continue selon la revendication 9, dans laquelle des galets de forme parabolique (11A) sont pourvus d'un axe non parallèle à l'axe desdits engrenages de guidage (11B).

11. Transmission à variation continue selon la revendication 9 dans laquelle l'axe des galets de forme parabolique (11A) qui comprend ledit engrenage incliné qui tourne et se positionne de manière radiale dans une plage de 180 ° autour dudit engrenage de guidage (11B) et dudit engrenage arrière (13), ledit croisillon se déplaçant de manière axiale.

12. Transmission à variation continue dans laquelle lesdits galets de forme parabolique (11A) sont dotés de gorges hélicoïdales correspondant à l'angle de contact selon lequel ils correspondent aux dites rainures de l'impulseur.

13. Transmission à variation continue selon la revendication 2 dans laquelle ledit arbre d'accouplement double (19) s'engrenant avec ledit train d'engrenages arrière peut dévier de manière séquentielle vers le haut ou vers le bas par l'intermédiaire du maillon de jonction (29) à chaque fois que ledit arbre externe (16) atteint un certain déploiement longitudinal.
